Europäisches Patentamt

European Patent Office

Office européen des brevets

(19)

(11) EP 1 578 158 A1

(12) EUROPEAN PATENT APPLICATION

(43) Date of publication:
21.09.2005 Bulletin 2005/38

(51) Int Cl.7: H04Q 7/34

(21) Application number: 04425176.7

(22) Date of filing: 16.03.2004

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(71) Applicant: Siemens Mobile Communications
S.p.A.
20126 Milano (IT)

(72) Inventors:
• Berra, Marco
  20010 Mesero (MI) (IT)
• Sartorelli, Stefano
  1-20020 Busto Garolfo (MI) (IT)

(54) **Method and system to monitor critic events in digital mobile radio networks**

(57) Directive arrays are used in the base stations of a digital mobile radio network for tracing each call in progress on the basis of the direction of arrival (DOA) and the time of arrival (TA) of the relevant signal, so as to calculate the probability that at least a monitored critic event comes true inside each territorial pixel determined by the range of precision of the DOA and TA. The probabilities in this manner calculated are stored in a memory map, having a number of locations equal to the number of pixels. The reading of the map, preventively sorted by decreasing value, indicates the grade of statistical relevance of the pixels as far as the persistence of anomalous events is concerned. Typical monitored critic event are: a) the rate of calls lost for connection failure, indicative of uncovered spot and/or handover parameters not correctly set; b) the rate of calls released for excessive distance from the base station, indicative of the incorrect planning of the cell and cluster dimensions; c) the rate of calls subjected to intercell or intracell handover, indicative of an incorrect assignment of the resources inside the cell. According to a first embodiment valid for re-equilibrating the traffic in the cell, the in progress calls relevant to those mobiles inside pixels associated one-to-one to the highest locations of the memory map are shifted to adjacent cells whenever possible. For this aim the relevant mobiles are commanded to start a forced intercell handover procedure. According to a second embodiment valid for accepting priority calls in congested cells, once a priority call is originated or paged (terminated) in the congested cell, the set of all non-priority calls with the same physical requirements of the priority call is determined; then a non-priority call associated to the highest position of the memory map is pre-empted to be shifted and its mobile is commanded to execute a forced intercell handover (fig.6).

VISUAL SUPPORT TO A CRITERION FOR ACCEPTING
PRIORITY CALLS IN A CONGESTED CELL

FIG. 6

**Description**

**FIELD OF THE INVENTION**

The present invention relates to the field of mobile radio networks and more precisely to a method and system to monitor critic events in digital mobile radio networks.

**BACKGROUND ART**

Digital mobile radio networks, whenever congested by heavy traffic, have the risk to enter into a congested state, i.e. into the state of block of the service. This congested state makes the interested part of the network practically unusable for new incoming traffic, because all resources are busy and new calls are unaccepted. Usually a wireless network is planned to absorb a traffic peak measured during the maximum busy hour. Nevertheless a congestion is still possible either during short and particularly heavy peaks or for an erroneous territorial planning of the cells and the respective resources, or due to unknown causes. In case of misplanning, critic events are always generated in the same area, such as: spontaneous drop of connections or anomalous release due to bad radio coverage. Precise positioning of the problematic areas is difficult to locate with traditional tri-sectorial antennas due to their poor directivity..

According to the present state of the art, the network operator is enabled to monitor the network for discovering possible planning errors and/or bad dimensioned parameters. For this purpose some scanners exist which periodically collect suitable information by means of dedicated counters, in particular they collect the following critic events:

- lost calls for connection failure, indicative of uncovered spot and/or handover parameters not correctly set;
- released calls for excessive distance from the base station, indicative of the incorrect planning of the cells;
- calls affected by intercell or intracell handover, which give the same indication of the previous points plus an incorrect assignment of the resources inside the cell.

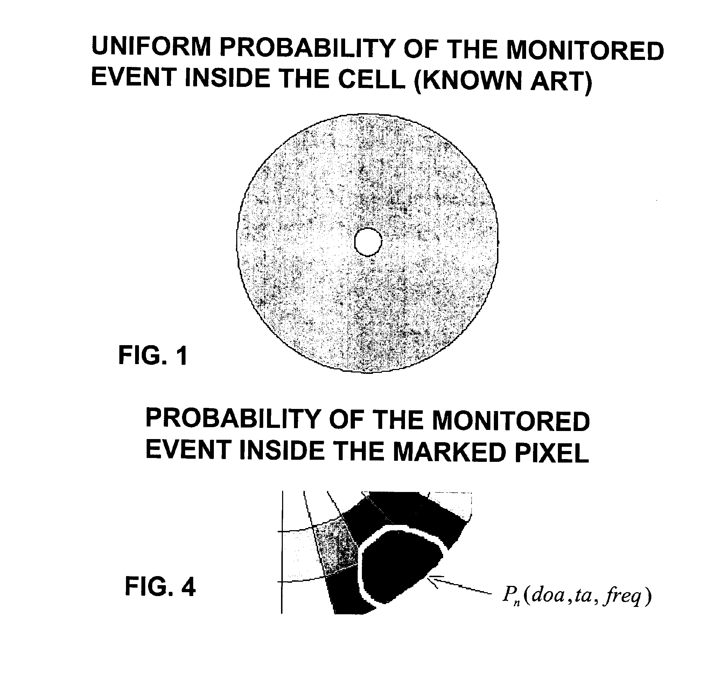

All the scan counters are triggered by events occurred on the whole cell they are referred to, so that the result of each computing divided by the number of admitted calls in the counting period indicates the probability of the counted event. This way to operate considers the event equiprobable (averaged) on the whole cell, and nothing is known on the location of the event in a particular position inside or at the neighbouring of the cell. As a consequence, it should not be possible undertake preventive countermeasures to prevent the happening of these events. In **fig.1** a visual support is given to the equiprobable event. With reference to the figure, the cell is represented by a circle with an omnidirectional antenna at the centre and the probability value is indicated by the uniform grey.

The absence of a punctual location of anomalous events inside or at the neighbouring of the cell forces the operator to use test mobiles in known positions of the cell for monitoring purposes. Another drawback occurs when all the resources of the cell are busy in consequence of traffic peaks. Usually some public services (e.g.: police, firemen, ambulances, etc.), just for their privileged role, have granted priority calls with respect to other users, so they have the possibility to access the network at the only origination of a priority call. On the other hand, a non-priority call is one which can be shifted or released by virtue of a subscription clause. Every time a priority call is received in one of the mobile radio systems presently in exercise, and there are not available resources, the network starts up a pre-emption procedure consisting of the search of a "vulnerable" call among all the non-priority ones in progress, and once it is found a forced handover is commanded to the respective mobile. In the last instance if the forced handover fails the call is released. Independently of the considered systems, either GSM or UMTS, the pre-emption procedure is carried out without considering which non-priority call is better to shift/release, so that in practice a vulnerable call is randomly selected. This is a non-optimal way to operate because especially in CDMA systems, whose throughput is limited by the interferences, a different criterion to select the calls to be shifted/released is preferable.

The absence of a punctual location of anomalous events inside or at the neighbouring of the cell has been since now focalized to the only "call-related" critic events: e.g.: lost calls, released calls, and intercell handover, but the same conclusions are valid for all the measures usually performed by the mobiles and the base station, with particular attention to the interference which can derive from natural or artificial causes, e.g.: obstacles, reflecting surfaces, etc.

**OBJECTS OF THE INVENTION**

The main object of the present invention is to overcome the drawbacks of the prior art and indicate a completely centralized method to monitor critic events with narrow territorial details and undertake corrective actions.

A second object of the invention is to indicate how preventing possible critic events, such as connection failure in the cell.

A third object of the invention is to indicate how accepting incoming priority calls during the cell congestion state.

**SUMMARY AND ADVANTAGES OF THE INVENTION**

The invention achieves the aforementioned purposes by providing a method to monitor critic events in digital mobile radio networks, as disclosed in the method claims.

Additional object of the invention is a digital mobile radio system operating according to the method of the invention, as disclosed in the system claims.

According to the method of the invention, a directive array is used in the base station in order to trace each call in progress on the basis of the direction of arrival (DOA) and time of arrival (TA) of the relevant signal, so as to calculate the probability that at least a monitored event, including the ones listed in the introduction, comes true inside each territorial pixel determined by the range of precision of the angle and delay measures, the latter being converted in distance from the mobile. The probabilities in this manner calculated are stored in a memory map. The reading of the map, preventively sorted by decreasing value, indicates the grade of statistical relevance of the pixels as far as the persistence of anomalous events is concerned. The invention requests base stations (at least one) equipped with a directive array able to generate a radiation pattern with N narrow lobes (pencils) covering the whole cell, together with a time synchronization circuit able to resolve submultiples of the maximum permissible delay. The pixel subdivision of the cell due to the intersection between the two discrete set of the DOAs and the distances from the mobiles, improves the territorial details of the monitored events. Base stations equipped with intelligent arrays is known in the art for different purposes, the Applicant himself owns some patents on this field. This type of antennas are mostly used:

- to reduce the power requirements of the singular RF transmitter;
- to reduce the overall level of the interferences as a consequence of their directivity;
- to implement joint spatial-temporal equalization for a more precise and faster channel estimation
- to introduce the SDMA (Space Division Multiple Access) technique based on the sole DOA.

Apparently, there is not indication of how using directive arrays as indicated by the present invention.

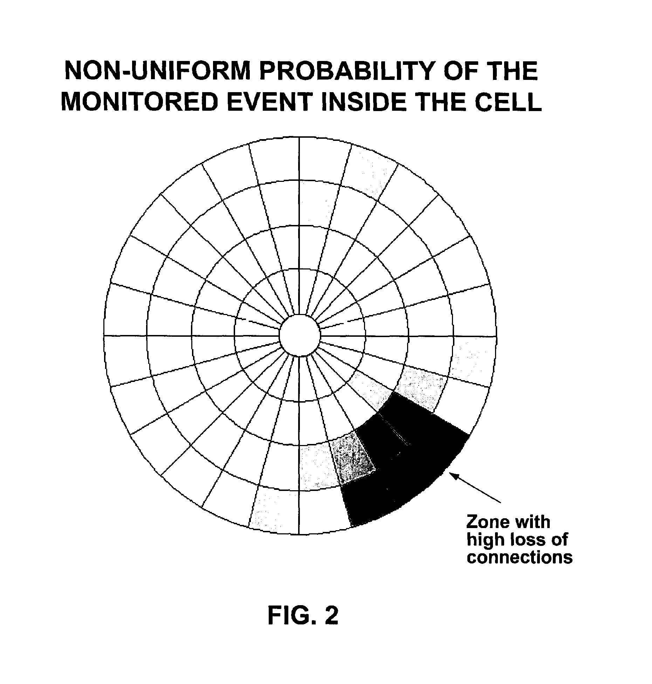

In **fig.2** a pictorial representation of the method of the invention is given. With reference to the figure, a cell (without limitation circular) is subdivided into N angular sectors each representing a DOA spanning the angular resolution of the array (given by the N-1 number of dipoles). The circular cell is further subdivide into N concentric circles of different radius, so as to form M concentric rings (TAs) each representing a measure of distance from the array, spanning the time resolution typical of the system. As already said, the intersection of the N angular sectors with the M rings generates NxM territorial pixels on which calculating the probability that an event (e.g. connection failure) has been verified in the past. The pixel area depends on the number of pixels in the cell. The gradation of grey qualitatively indicates the values of the estimated probability of the considered event; namely, as the gradation tends to the black as the value of the probability increases. The darker zones in the figure are associated to pixels with the higher probability. The white zones are associated to pixels not yet interested by the monitored event. Due to a limitation in the possible gradation of grey, the qualitative representation might be deceptive because many pixels appear as having the same probability while in the reality this circumstance is not true. Despite this editorial limitation, contrarily to the uniform grey of **fig.1**, the probability of the monitored event depicted in **fig.2** is like a mosaic indicating different values inside the cell.

The method of the invention has the primary advantage of providing in automatic fashion a constantly updated map of the persistence of anomalous events inside and at the neighbouring of the cell, with sufficient territorial details and statistical reliability and without the need of test mobiles in the network but employing the ensemble of the already existing mobiles. The fact to have collected data which reflect the real word of the cell as a whole is undoubtedly a vantage with respect to a single test instrument working in isolation. Thanks to the map, possible misplanning of the cells and/or the O&M parameters are promptly discovered and some corrective actions can be quickly undertaken. Planning errors are due for example to wrong radio coverage of the serving cell, and/or to have underestimated the interference from the adjacent cells, and/or the set of erroneous thresholds for common procedures at the radio interface (handover, power control, etc.). A comparative analysis of the probability values among the pixels allows to detect possible areas, to say single pixels or groups of adjacent pixels, where the standard deviation is high. Let's suppose the network operator realizes that in a cell too many calls are lost, firstly accordingly to the prior art and successively to the present invention. The scanners of the prior art give the indication of the event "connection failure" only on the whole cell and nothing else. The method of the invention, instead, indicates this event on the various pixels of the cell so as to localize the origin of the anomalous disconnections as the pixel/s where the event is more frequent.

At this point two modalities are open to carry out corrective actions tending to reduce or eliminate the monitored critic event, a first one is that to proceed anyway with the corrective action even whether the reasons are not completely known, while a second one is that to do other considerations to check the possible causes of the monitored critic events. According to the first modality, two specializations of the invention, named "variants" in the following description are foreseen.

With reference to **fig.2** (in this case referred to the event intercell handover), according to a first variant of the method valid either for congested or non-congested cells, the in progress calls relevant to those mobiles inside pixels associated one-to-one to the highest locations of the memory map are shifted to adjacent cells whenever possible. For this aim the relevant mobiles are commanded to start a forced intercell handover procedure. In case an intercell handover is failed and the cell is not congested, an intracell handover can be attempted. The advantage of this embodiment is that of re-equilibrating (balance) the traffic in the cell for preventing possible connection losses due to excessive distance.

According to a second variant of the method valid for accepting priority calls in congested cells, once a priority call is originated or paged (terminated) in the congested cell, the set of all non-priority calls with the same physical requirements of the priority call is determined; then a non-priority call associated to the highest position of the memory map is pre-empted to be shifted and its mobile is commanded to execute a forced intercell handover. In case the handover fails the pre-empted call is released and the released resources (frequency, time slot, code) are re-assigned to the priority call.

Both the first and the second variant of the method introduce a criterion to shift those calls that are generated by mobiles (in dedicated mode) inside a pixel having high probability of "generating" intercell handovers, so that calls allocate herein have higher probability to be shifted in short time to an adjacent cell. This also means, from a statistical point of view, that those calls receive low-level signals and the receiving mobiles are most probably transmitting with high power. As a consequence of this fact, said calls are troublesome due to the interference cause on the other users. The fact to shift those troublesome calls is helpful in the GSM, but it appears of great importance in the CDMA systems because they are limited by the interference and the shift of some calls for bad radio conditions allows the allocation of new users.

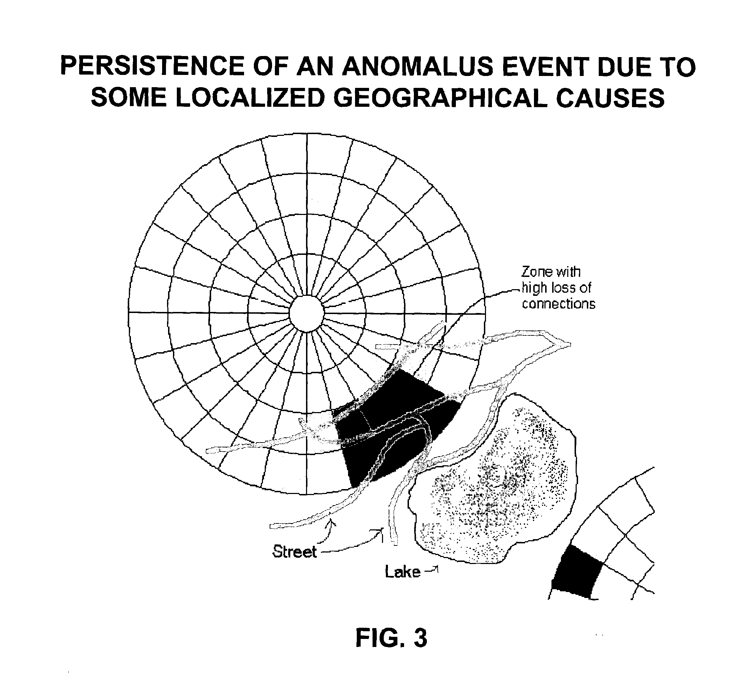

According to the second modality for carrying out corrective actions, the operator may trace the cell on a small-scale physical map of the territory, in order to check the morphology and/or the presence of possible obstacles to the signal propagation, either natural or artificial infrastructures, creating shadowing zones and the consequent connection failures. With reference to **fig.3**, these failures are imputable to the high interferences generated by the high reflecting surface of a lake. Possible corrective actions are directed to change the coverage of the cell in order to include the uncovered spot, and/or to change some parameters of the quality of service (QoS) of the connections involved in the bad pixels. Besides, in order to evade a shadowing obstacle a smart reception beamforming exploiting the echoes of the signal might be performed. Another countermeasure against high interferences is the commutation to more robust modulation and coding schemes (PHY mode) with lower data rates. Further corrective action valid for cells in non-congested state is the increase of the resources at the disposal of bad pixels.

From the preceding description of the invention the following conclusions are worthwhile of attention:

- collecting critic events concerning the in progress calls also means to consider the type of channel which bears the calls in the involved mobile radio system. With that, a critic event is collected for each admitted combination of physical parameters (i.e..: frequency, timeslot, spreading code) which stands the channel up.
- the subdivision in pixels of the cell is performed at the reception side of the base station, thanks to the reception beamforming. As know, the transmission and reception radiation patterns of the antennas are the same, because of their reciprocal behaviour. As it concerns the subdivision of the cell at the transmission side, the only possible one is subdividing the cell according to the direction of transmissions DOT. For this aim the knowledge of the DOAs from the reception beamforming can be advantageously used to transmit in the same directions; alternatively the array can be commanded for transmitting with the usual tri-sectorial diagram.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1** shows with uniform grey a qualitative equiprobable representation that the monitored event comes true in the cell calculated according to a method of the known art;
- **fig.2** shows with gradation of grey a qualitative mosaic representation of the probability that the monitored event comes true in the cell calculated according to the method of the invention;
- **fig.3** shows possible geographical causes of the persistence of an anomalous event in the cell monitored according to the method of the invention.

- **fig.4** shows a particular of fig.2 referred to a darkest pixel with higher probability of the monitored event;
- **fig.5** shows a flowchart of an algorithm oriented to re-equilibrate the traffic in the cell for preventing possible connection losses;
- **fig.6** provides a visual support to a criterion for accepting priority calls in a congested cell;
- **fig.7** shows a flowchart of an algorithm oriented to accept incoming priority calls during the cell congestion state;
- **figures 8a** to **8c** show different types of directive arrays;
- **fig.8d** shows an N-lobe circular radiation pattern achievable by means of the directive arrays of the preceding figures 8a to 8c;
- **fig.9a** shows the most general architecture of a GSM network modified to implement the present invention;
- **fig.9b** shows the general architecture of the blocks BTS and BSC both included in block BSS of fig.9a.

DETAILED DESCRIPTION OF PREFERRED EMBODIMENTS OF THE INVENTION

Directive arrays and the supporting theory able to obtain the sectorial coverage of **fig.2** are well known in the art, one of them is described in the international patent application WO 98/53625, titled: "SOLELY DIGITAL BASE STATION AND DIGITAL BEAMFORMING FOR MOBILE RADIO SYSTEMS", in the name of the same Applicant.

The base station equipped with a directive array monitors the call-related events listed in the introduction plus other critic events considered worthy of attention by the network operator and not necessarily due to the calls, for example the increased interference level caused by some infrastructures or reflecting surface.

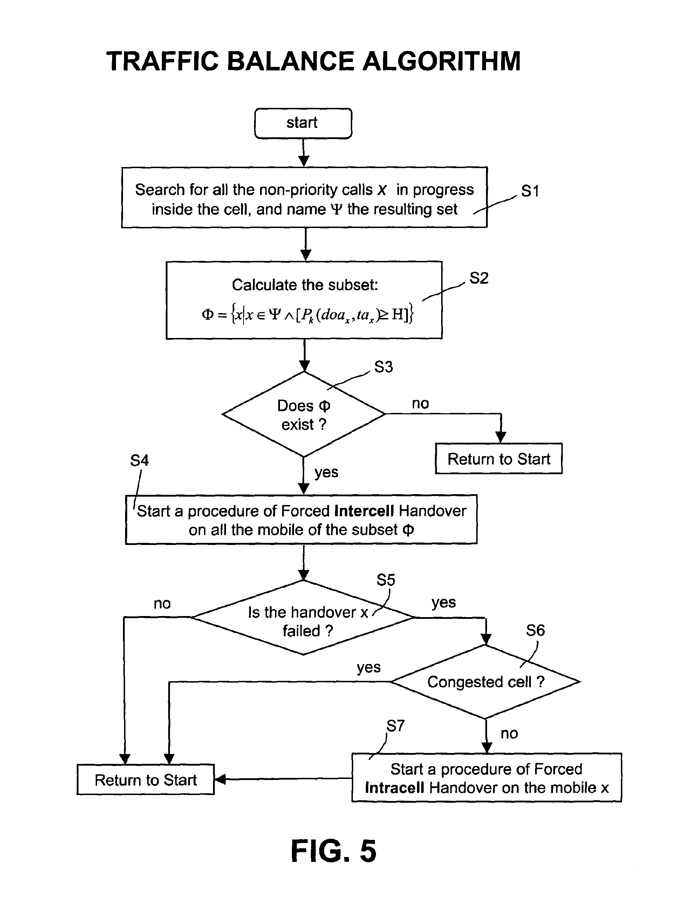

With reference to **fig.4**, the probability that a monitored event comes true in a pixel determined by the selected DOA and TA, for a given frequency and Cell-Identity, can be calculated by means of the following recursive expression:

$$P_{k+1}(doa,ta,freq) = \mu\left[\frac{E_{kW+1}^{(k+1)W}(doa,ta,freq)}{W}\right] + (1-\mu)P_k(doa,ta,freq) \qquad \text{Eq.(1)}$$

Notice that the probability $P_k$ is conditioned to the happening of the event itself in the cell with a given probability, where:

μ     represents a forgetting factor comprised between [0, 1];
W    is the window of the last W events come true in the cell;
k     is an index incremented every time the window W is completed;

$E_{kW+1}^{(k+1)W}$ (doa,ta,freq) represents the number of events come true in the pixel determined by the particular (doa, ta, freq) in the observation window W. Besides, due to the fact that Eq. 1 is recursive, it needs to define:

$$P_0(doa,ta,freq) = \frac{E_1^W(doa,ta,freq)}{W} \qquad \text{Eq.2}$$

and therefore the first recursion results:

$$P_1(doa,ta,freq) = \mu\left[\frac{E_{W+1}^{2W}(doa,ta,freq)}{W}\right] + (1-\mu)P_0(doa,ta,freq) \qquad \text{Eq. 3}$$

The Eq. 3 includes two terms: a first one in the left representing the time evolution of subsequent events in the considered pixel, and a second one in the right which constitutes the past memory. The updating of the past memory associated to each pixel is performed at the occurrence in the cell of every W events. The Eq. 1 represents the output of a so-called running average filter including parameters easily configurable by corresponding O&M attributes; with that a fine tuning of the algorithm is possible. For example:

- acting on the forgetting factor p it is possible to determine the weight to assign to the new events, with respect to the past memory term; weights close to one indicate the willing to follow the changes quickly, and vice versa for weights close to zero;
- increasing the width of the observation window W, sudden and sporadic discontinuities are avoided.

The base station controller systematically repeats the calculation of above for all the pixels of the couple of cell&frequency addressed by a pixel index spanning all the combinations of the DOAs and TAs, and completes a memory map to store the value of the relevant probability. It is convenient to sort the memory map by decreasing probability values and the sorted priorities stored in memory together with their pixel index. Possible cases of equal probability of the monitored event between two or more pixels are resolved by the controller itself, for example:

- writing the pixel index and the respective probability value of the equiprobable pixels in successive locations of the memory map with the same order they are considered by the sort algorithm;
- assigning a weight to each pixel on the basis of the distance from the array and/or the azimuthal position; for example, a weight increases with the distance of the pixel from the array and the angle from the north in clockwise direction.

From now onwards a version of the previous expressions Eq. 1, 2, and 3 without the indication of the frequency will be used; this assumption is considered valid for the successive applications of those expressions according to two variants of the invention.
Considering the probability of critic events qualitatively represented in the scenarios of the preceding **figures 2** to **4**, the invention is now further specialized by a first variant aimed to pre-empt the ordinary calls associated to the most critic pixels, and attempt to shift the pre-empted calls out of the cell in order to prevent possible connection losses. This is achievable during either the congestion or non congestion state of the cell. In particular the following case is considered: the cell is congested while its adjacent cells allow to bear some other traffic. The network should have the opportunity to start some handover procedures aimed by the intention of balancing the traffic in the cell, but the problem to select candidate calls to be shifted should be posed as a consequence. Thanks to the generation of the memory map as described above, a series of historical results provide knowledge of those pixels where the handovers are more probable. This information can be used to pre-empt mobiles in the highlighted pixels as candidates for intercell handovers. Acting in this way the handover events, anyway happening in short-term, are only anticipated. As an immediate result, the performances of the network are improved from the reduction of the interferences otherwise generated by the shifted calls during all the time before their handovers take place; in fact high transmission power levels are most probably involved with these calls. The algorithm of the first variant of the invention is described with the help of the flow chart of **fig.5**.
With reference to **Fig.5,** a first step **S1** is devoted to perform an exhaustive search of all the calls in progress in the cell. The purpose of the search is that to associate each call one-to-one to the generic pixel x on which the involved mobile x is localized by the ensemble of the directive array and the distance discriminator circuit. The resulting set of calls is named $\Psi$. A subset $\Phi$ of the set $\Psi$ is calculated in step **S2** according to:

$$\Phi = \left\{ x \middle| x \in \Psi \wedge [P_k(doa_x, ta_x) \gtreqqless H] \right\} \qquad \text{Eq. 4}$$

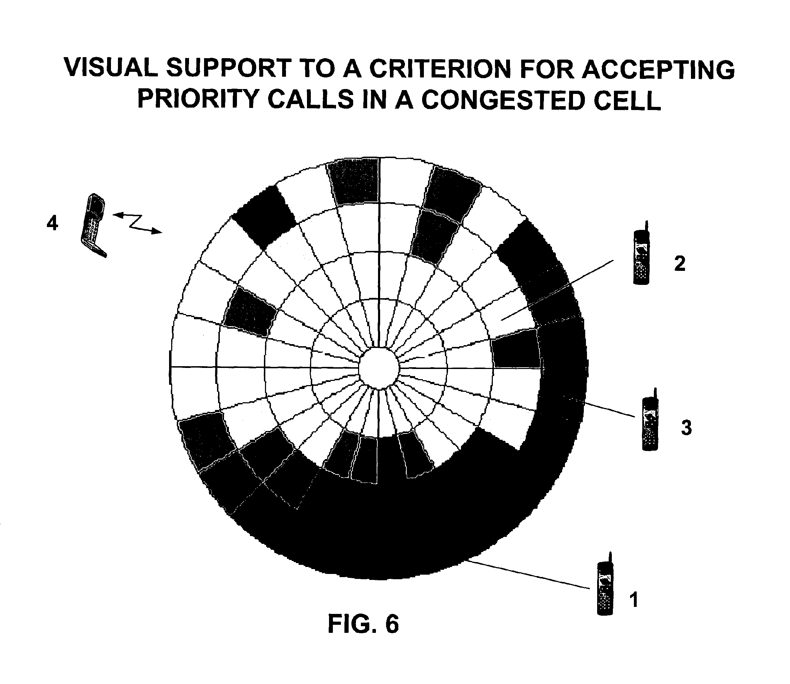

where the subset $\Phi$ includes those calls, generically indicated by x, such that for each x belonging to the set $\Psi$, the probability of the monitored event in the associated pixels is greater than or equal to a maximum threshold $H < 1$ whose optimal value will be discussed. The existence of a non-empty subset $\Phi$ is checked in step **S3.** If the subset $\Phi$ exists, a procedure of forced intercell handover is started in step S4 on all the mobiles x, in the contrary case the algorithm is restarted from step S1. The value of H is selected in S2 high enough to prevent the generation of too many handovers which can be refused by the adjacent cells, and low enough to allow a certain number of handovers is actually executed. The exit of each intercell handover is checked in step **S5**, in case of good end the algorithm is restarted from step S1 otherwise a check on the grade of traffic saturation of the cell is executed in step S6. If the cell is congested the algorithm is restarted from step S1 otherwise a procedure of intracell handover is started in step **S7** on the mobile x whose intercell handover is failed in S5.
The statistical analysis carried out through the Eq. 1, 2, and 3 and the consequent memory map of critic pixels are used by a second variant of the invention aimed to establish a criterion for accepting priority calls in a congested cell. Visual support is given in the diagrammatic representation of **fig.6** referred to a qualitative probability distribution of the event "intercell handover". With reference to the figure, four mobiles are visible in the cell, those indicated with 1, 2, 3 are served with the ordinary priority level and are subduable to be pre-empted, while the fourth one indicated with 4 requests service with higher priority, i.e.: due to an unexpected event (fire, car accident, etc.). In a GSM network the priority information are put at the disposal of the BSS (BTSs plus BSC) by MSC through the "Priority" field of the Level 3 message "Assignment Request" (or "Handover Request" in case the access of the mobile to the cell has been caused by an external handover). As highlighted in **fig.6**, this type of event is most probably verified in pixels disposed along the boundary of the cell, without excluding that some internal pixels can assume the same higher probability due to local peculiarities of the radio environment, for example, high interfered zones for whatever reason. Let the generic mobile 1, 2, 3, indicated with x, located in the pixel ($doa_x, ta_x$), then the $P_k(doa_x, ta_x)$ are calculated as aforementioned and the memory map gives the following result:

$$P_k(doa_1, ta_1) > P_k(doa_3, ta_3) > P_k(doa_2, ta_2), \qquad \text{Eq.5}$$

let further suppose that the highest priority mobile 4 is requesting a radio channel with the same characteristics as the channels used by the lower priority mobiles 1, 2, 3. As a consequence of Eq. 5, the mobile 1 is selected by the network to attempt a forced handover towards a neighbouring cell. The selection criterion of Eq. 5 can be further generalized with the introduction of a threshold $\Omega$ to the minimum probability $P_k(doa_x, ta_x)$, having the purpose to avoid of taking into consideration those pixels with the probability of the event is extremely low, namely:

$$P_k(doa_x, ta_x) \geq \Omega, \qquad \text{Eq.6}$$

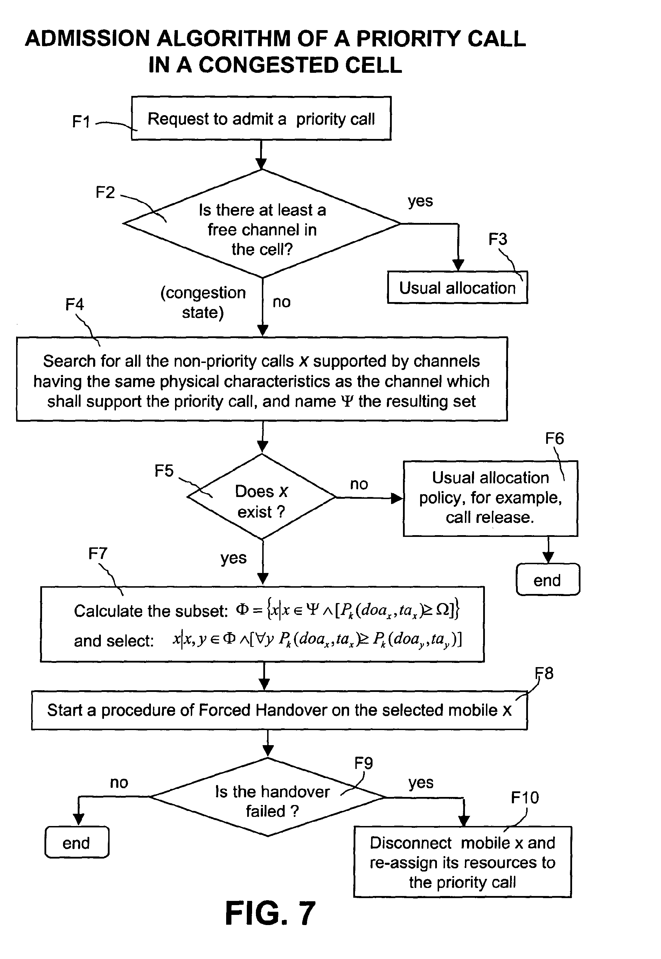

despite Eq. 6, the threshold $\Omega$ can be posed to zero for considering all the pixels. **Fig.7** gives better support to the algorithm of the second variant of the invention. Without limitation, the algorithm is performed by a processor of the base station controller (BSC, RNC, or the like) on the basis of information exchanged with the controlled base stations and the MSC node.

With reference to **fig.7,** in step **F1** it may happen that at a certain instant a mobile inside the congested cell either performs a random access to request a priority call (originated call) or is paged to receive a priority call (terminated call). In step **F2** a free channel is searched, which is not found because the cell is congested for initial supposition; in the contrary case the usual allocation would be performed in **F3**. In the step **F4** successive to F2 an exhaustive search is carried out among all the non-priority calls in progress in the congested cell, to check if some calls (at least one) are supported by channels having the same physical characteristics of the channel requested for the priority call. The existence of a non-empty set $\Psi$ of the searched calls is checked in step **F5**. In the remote case the set $\Psi$ is empty, the usual allocation policy is applied in step F6, for example call release. Other purpose of the exhaustive search is that to associate each call of the set $\Psi$ one-to-one to the pixel x on which the involved mobile x is localized by the ensemble of the directive array and the distance discriminator circuit. Depending on the number of pixels, more than one calls can be associated to the same pixel x. In the most probable case the set $\Psi$ exists, a subset $\Phi$ of the set $\Psi$ is firstly calculated in step **F7** by means of the following expression:

$$\Phi = \left\{ x \middle| x \in \Psi \wedge [P_k(doa_x, ta_x) \geq \Omega] \right\} \qquad \text{Eq. 7}$$

where the subset $\Phi$ includes the only non-priority calls, generically indicated by x, such that for each x belonging to the set $\Psi$, the probability of the monitored event in the associated pixels is greater than or equal to the minimum threshold $\Omega$. Again in step F7 the following expression is verified:

$$x | x, y \in \Phi \wedge [\forall y P_k(doa_x, ta_x) \geq P_k(doa_y, ta_y)]; \qquad \text{Eq.8}$$

according to Eq. 8, for each non-priority couple of calls of the subset $\Phi$, generically indicated by x, y , the selected x having the greatest probability of the monitored event in the associated pixel is the only one which results from the bracket condition. This condition is equivalent to the sort algorithm mentioned for the memory map used to store the values of probability associated to the pixels. In the successive step **F8** a forced intercell handover procedure is started on the selected mobile x. The good end of the forced handover is checked in the successive step **F9**; if the handover is successful the algorithm is ended, otherwise a successive step **F10** is executed for disconnecting the mobile x and re-assigning its resources to the priority call.

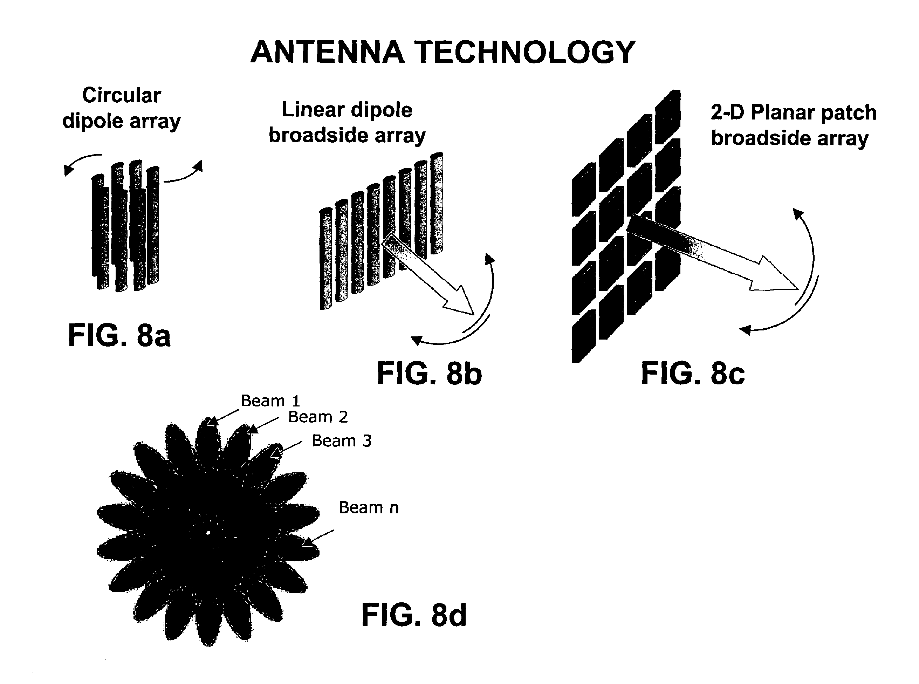

Now a mobile radio system suitable to implement the method of the invention and its variants is described with the support of the remaining figures. Some examples of directive arrays suitable to be used in a base station operating in accordance with the present invention is depicted **fig.8a, 8b**, and **8c**. A circular multi-lobe radiation pattern of N angular sectors similar to the pattern depicted in figures 2 and 6, but achievable by those directive arrays is visible in **fig.8d.** As mentioned in the cited prior art document, this radiation pattern is achievable with n+1 closely spaced dipoles. Another way to obtain this radiation pattern is the known technique of switched beams.

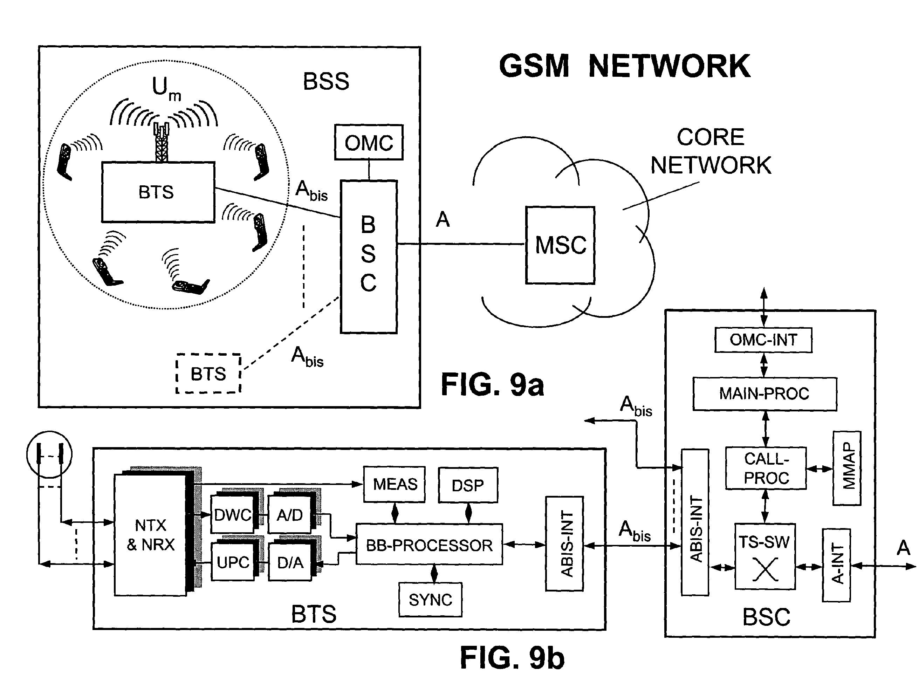

Fig.**9a** shows a very general representation of the GSM network including at least a Base Station Subsystem (BSS) connected to an MSC (Message Switching Centre) by means of the A interface. The MSC belongs to the Core Network. The BSS subsystem includes a plurality of BTSs (Base Transceiver Station) connected to a BSC (Base Station Controller) through respective Abis interfaces. The BTSs are connected on-air to the mobile stations inside the cell determined by the radio coverage of the directive array of the BTS. The physical radio channel and the relevant protocol are described in the specifications of the Um interface. Presently all the standardization of the GSM system is handled by the 3GPP committee. The BSC is further interfaced to the OMC (Operation and Maintenance Centre). **Figure 9b** is limited to some essential details of the BTS and BSC blocks useful to implement the invention. With reference to **fig.9b**, the BTS block includes a multiple transceiver block NTX & NRX including N radiofrequency power transmitters and N low-noise RF receivers, each pair of transmitter and receiver being dedicated to a replica of the channel signal. The multiple NTX & NRX block is connected: to the arrays of N antennas, a multiple frequency down-conversion block DWC, and a multiple frequency up conversion block UPC. The multiple DWC converter is connected to a multiple analogue-to-digital converter A/D, while the multiple UPC converter is connected to a multiple digital-to-analogue converter D/A. The arrows indicate the directions of the signals. The multiple A/D and D/A converters are connected to a baseband processor BB-PROCESSOR, which is further connected to the following blocks: mathematical co-processor DSP, time synchronization circuit SYNC, Abis interface ABIS-INT, and measuring MEAS. The BSC controller includes a companion Abis interface block ABIS-INT, connected to a side of a time-space switching matrix TS-SW whose other side is connected to an A interface block A-INT. The TS-SW matrix is connected to a call processor CALL-PROC, in its turn connected to an administrative processor MAIN-PROC and to a non-volatile MMAP read/write memory. The MAIN-PROC is further connected to an interface block OMC-INT towards the OMC centre, and to all the remaining blocks of BSC (these connections are not indicated in the figure). The various processor blocks include all the known parts needed for their operation, e.g.: CPU, ROM, RAM, I/O interfaces, interrupt controller, DMA controller, bus controller, etc. The various operation programs (firmware) are stored into the ROM.

In operation, the mathematical DSP executes the "beamforming" algorithm selected for discriminating the DOAs from the N replicas of the baseband reception signal. The outcome of the algorithm are the DOAs and a set of weights and phase-shifts for each replica which is stored to be used for obtaining the transmission radiation pattern of the cell. Concerning time synchronization, two level of downlink synchronization are generally performed. A first level is based on synchronization bursts periodically transmitted by the base station downlink to the mobiles on the FCCH, SCH beacon channels. A second level of synchronization is performed through the procedure of "adaptive frame alignment", based on the training sequence transmitted in the midamble of each normal burst and known at the BTS receivers. The synchronization circuit SYNC calculates the delay of the various reception bursts received by each channel from the begin of its TDMA frame (Time Division Multiple Access). The instant of maximum correlation between the received burst and the stored midamble gives indication of the transmission delay of the mobile. In order to obtain greater precision on the measured delays, both the received bursts and the stored midamble are oversampled by a given factor. This allows to increase the number of concentric rings in the cell of the figures 2 and 6, and the number of pixels consequently. The circuit MEAS measures all physical parameters such as: signal strength, interference, C/I, BER (Bit Error Rate), etc. These measures are short-term and long-term averaged to be included in the signalling message "Measurement_Result" put at the disposal of the ordinary procedures implemented for the correct system operation, e.g.: Power control and Handover. The baseband processor performs for each channel all the needed operations for a correct transmission and reception of the various replicas of the signal, e.g.: coding, interleaving, burst formatting, ciphering, and modulation as the transmission is concerned, and the dual operations for the reception. The baseband processor converts the physical frames into the frames of the Abis interface, and vice versa. The Abis frames are delivered from the baseband processor to the interface circuit ABIS-SINT, which performs known handling to put the frames on the condition to be transmitted on the physical medium, and vice versa. The Abis frames convey, other than payloads (calls), all the accompanying signalling messages at the various levels of the network operating protocols, the commands of forced handover and forced connection release coming from the BSC included. CALL-PROC processor disassembles the received Abis frames and conveys the signalling to the internal or external destination points, while the payloads plus signalling generated internally to the BSC are conveyed into fluxes handled by the space-time switching matrix TS-SW for the routeing towards external destination points. Internal destination points are: the call processor itself, and the administrative processor; external destination points are: the BTSs, the MSC, and the OMC. The switching configuration of the matrix TS-SW is controlled by CALL-PROC processor. Switched fluxes are converted into frames of the A interface sent to the circuit interface A-INT, which performs known handling to put the frames on the condition to be transmitted on the physical medium, and vice versa. The protocol frames coming from the MSC at the A interface undergo a dual treatment as the Abis frames to re-directed part of the signalling towards the internal or external destination points, and payloads together with the accompanying signalling to the BTSs, previous conver-

**EP 1 578 158 A1**

sion into the Abis frames. In particular, the Level 3 message "Assignment Request" or "Handover Request" coming from the MSC include the field "Priority" useful to discriminate between ordinary and priority calls. Yet the call processor systematically collects the aforementioned critic events, calculates/updates their probabilities, stores the new values into the memory MMAP and performs the sort of memory content. In particular, the probability values are submitted to a running average filtering algorithm included in the stored program. Yet the call processor systematically reads the memory MMAP for the purpose of re-equilibrating the traffic in the cell, as per the first variant of the method of the invention, or accepting priority calls as per the second variant of the method of the invention. The administrative processor through the interface circuit OMC-INT gives support to the tasks which the network operator is entrusted to, such as the residual check of the persistence of anomalous conditions which are not automatically suppressed by the application of the various embodiments of the present invention.

**Claims**

1. Method to monitor critic events in digital mobile radio networks employing base stations (BTS) equipped with directional arrays of antennas for transmitting and receiving calls and signalling messages, at least a base station controller (BSC) connected between the base stations and the core network (MSC), and the base stations including beamforming means (DSP) able to discriminate the direction of arrival of the signals from the mobiles and synchronization means (SYNC) able to discriminate the delays, converted into distances, of the transmissions from the mobiles,
   **characterized in that** includes the following steps cyclically executed:

   - classifying the in progress calls for territorial pixels taking into account the intersection between directions of arrival and distances;
   - calculating the probability that a monitored critic event happened in the base stations (BTS) and negatively affecting the calls, comes true inside each territorial pixel;
   - classifying the pixels on the basis of sorted values of their probability in order to trace the ones more worthy of attention because of their higher values.

2. The method of claim 1, **characterized in that** said probability is calculated inside an observation window spanning a given number of events.

3. The method of claim 2, **characterized in that** the value of the probability is weighted by a forgetting factor smaller than or equal to one.

4. The method of claim 3, **characterized in that** the weighted probability is averaged by a running average filter.

5. The method of claim 4, **characterized in that** pixels are sorted by decreasing probability values and the sorted values are stored in a table addressed by an index of the pixels.

6. The method of any of the preceding claims, **characterized in that** the monitored critic event is the intercell handover.

7. The method of claim 6, **characterized in that** one or more mobiles of the traced pixels are commanded to execute a preventive intercell handover for re-equilibrating the traffic in the cell.

8. The method of claim 6, **characterized in that** includes the step of:

   - performing an exhaustive search of all the non-priority calls in progress in a congested cell, to check if one or more calls are supported by channels having the same physical characteristics of a channel requested for a priority call incoming the cell;
   - enabling the execution of preventive intercell handovers to the only mobiles of the traced pixels further belonging to the set determined at the preceding step, and in case the handover fails the usual call policy is applied, for example, call release.

9. The method of any claims from 1 to 5, **characterized in that** the monitored critic event is the number of calls lost for connection failure to get indications on spots in the radio coverage.

9

**10.** The method of any claims from 1 to 5, **characterized in that** the monitored critic event is the number of calls released for excessive distance of the mobiles from the base station to get indications on incorrect planning of the cells.

**11.** The method of any claims from 1 to 5, **characterized in that** monitored critic event is the interference level to get indications on the possible presence of natural or artificial obstacles or reflecting surface.

**12.** The method of any claims from 1 to 5, **characterized in that** the monitored critic event is the number of calls either subjected to intercell or intracell handover to get indications on incorrect assignment of the resources to the mobiles.

**13.** The method of any claims from 9 to 12, **characterized in that** the mobiles inside the traced pixels are commanded to switch towards a more robust modulation and coding scheme.

**14.** The method of claim 12, **characterized in that** the resources at the disposal of the traced pixels are increased.

**15.** The method of claim 9 or 10, **characterized in that** the radio coverage of the cell is changed in order to include the traced pixels.

**16.** Digital mobile radio system comprising base stations (BTS) equipped with directional arrays of antennas for transmitting and receiving calls and signalling messages, at least a base station controller (BSC) connected between the base stations and the core network (MSC), and the base stations including beamforming means (DSP) able to discriminate the directions of arrival of the signals from the mobiles and synchronization means (SYNC) able to discriminate the delays, converted into distances, of the transmissions from the mobiles, **characterized in that** the base station controller (BSC) includes call processing means (CALL-PROC) controlled by a stored program and interfaced with both said beamforming means (DSP) and said synchronization means (SYNC) for receiving the values of said directions of arrival and distances, and generating in correspondence a classification of the in progress calls for territorial pixels taking into account the intersection between directions of arrival and distances; the call processing means (CALL-PROC) are controlled to execute the monitoring of critic events happened in the base stations (BTS) which negatively affect the calls, and to calculate the probability that a monitored event comes true inside each territorial pixel; the call processing means (CALL-PROC) are further controlled to classifying the pixels on the basis of sorted values of their probability in order to trace the ones more worthy of attention because of their higher values.

**17.** The system of claim 16, **characterized in that** said call processing means (CALL-PROC) are controlled to update the content of a pixel map stored in memory (MMAP) which includes the value of probability calculated for each pixel, the updating being executed at the lapse of an observation window spanning a given number of events by submitting the stored values to a running average filtering algorithm included in said stored program.

**18.** The system of claim 17, **characterized in that** said monitored critic event is the intercell handover.

**19.** The system of claim 18, **characterized in that** one or more mobiles of the traced pixels are commanded to execute a preventive intercell handover for re-equilibrating the traffic in the cell.

**20.** The system of claim 18, **characterized in that** said call processing means (CALL-PROC) receive from the core network (MSC) a signalling message including a priority field stating the grade of precedence of the calls, and in case a congested cell is entered by a high priority call, said call processing means (CALL-PROC) are controlled to scan all lower priority calls active on channels with the same physical characteristics of the channel requested for the priority call, and issuing an intercell handover command to a positively scanned mobile also belonging to a pixel traced with the highest probability of critic event, and in case the handover fails releasing the resources assigned to the mobile.

# UNIFORM PROBABILITY OF THE MONITORED EVENT INSIDE THE CELL (KNOWN ART)

**FIG. 1**

# PROBABILITY OF THE MONITORED EVENT INSIDE THE MARKED PIXEL

**FIG. 4**

$$P_n(doa, ta, freq)$$

EP 1 578 158 A1

# NON-UNIFORM PROBABILITY OF THE MONITORED EVENT INSIDE THE CELL

Zone with
high loss of
connections

## FIG. 2

EP 1 578 158 A1

# PERSISTENCE OF AN ANOMALUS EVENT DUE TO SOME LOCALIZED GEOGRAPHICAL CAUSES

Zone with high loss of connections

Street

Lake

## FIG. 3

EP 1 578 158 A1

# TRAFFIC BALANCE ALGORITHM

start

Search for all the non-priority calls $x$ in progress inside the cell, and name $\Psi$ the resulting set — S1

Calculate the subset: — S2

$$\Phi = \{x | x \in \Psi \wedge [P_k(doa_x, ta_x) \geq H]\}$$

S3 — Does $\Phi$ exist ?

no → Return to Start

yes

S4 — Start a procedure of Forced **Intercell** Handover on all the mobile of the subset $\Phi$

S5 — Is the handover x failed ?

no → Return to Start

yes → S6 — Congested cell ?

yes → Return to Start

no → S7 — Start a procedure of Forced **Intracell** Handover on the mobile x → Return to Start

## FIG. 5

# VISUAL SUPPORT TO A CRITERION FOR ACCEPTING PRIORITY CALLS IN A CONGESTED CELL

**FIG. 6**

EP 1 578 158 A1

# ADMISSION ALGORITHM OF A PRIORITY CALL IN A CONGESTED CELL

F1 — Request to admit a priority call

F2 — Is there at least a free channel in the cell?

yes → F3 — Usual allocation

(congestion state) no

F4 — Search for all the non-priority calls $X$ supported by channels having the same physical characteristics as the channel which shall support the priority call, and name $\Psi$ the resulting set

F5 — Does $X$ exist ?

no → F6 — Usual allocation policy, for example, call release. → end

yes

F7 — Calculate the subset: $\Phi = \{x \mid x \in \Psi \wedge [P_k(doa_x, ta_x) \geq \Omega]\}$

and select: $x \mid x, y \in \Phi \wedge [\forall y \; P_k(doa_x, ta_x) \geq P_k(doa_y, ta_y)]$

F8 — Start a procedure of Forced Handover on the selected mobile x

F9 — Is the handover failed ?

no → end

yes → F10 — Disconnect mobile x and re-assign its resources to the priority call

# FIG. 7

# ANTENNA TECHNOLOGY

**Circular dipole array**

**FIG. 8a**

**Linear dipole broadside array**

**FIG. 8b**

**2-D Planar patch broadside array**

**FIG. 8c**

Beam 1
Beam 2
Beam 3

Beam n

**FIG. 8d**

EP 1 578 158 A1

**GSM NETWORK**

BSS

U$_m$

OMC

BTS

A$_{bis}$

B S C

A

MSC

CORE NETWORK

BTS

A$_{bis}$

**FIG. 9a**

A$_{bis}$

OMC-INT

MAIN-PROC

CALL-PROC

MMAP

ABIS-INT

A$_{bis}$

ABIS-INT

TS-SW

A-INT

A

NTX & NRX

DWC

A/D

MEAS

DSP

UPC

D/A

BB-PROCESSOR

ABIS-INT

SYNC

BTS

BSC

**FIG. 9b**

EP 1 578 158 A1

**European Patent Office**

## EUROPEAN SEARCH REPORT

Application Number

EP 04 42 5176

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 021 329 A (KORNESTEDT CARL FREDRIC ULF ET AL) 1 February 2000 (2000-02-01) * column 2, line 55 - column 3, line 17 * * column 5, line 11 - column 9, line 35; figures 1,2,3a,3b,4 * | 1-20 | H04Q7/34 |
| A | US 5 642 353 A (OTTERSTEN BJORN ET AL) 24 June 1997 (1997-06-24) * abstract * * column 15, line 15 - column 16, line 57; figure 5 * | 1-20 | |
| A | "Digital cellular telecommunications system (Phase 2+); Radio subsystem link control (GSM 05.08 version 7.4.1 Release 1998); ETSI EN 300 911" ETSI STANDARDS, EUROPEAN TELECOMMUNICATIONS STANDARDS INSTITUTE, SOPHIA-ANTIPO, FR, vol. SMG2, no. V741, October 2000 (2000-10), XP014002090 ISSN: 0000-0001 * page 41 - page 42 * | 2-4,17 | |
| A | MOULY M ET AL: "RADIO RESOURCE MANAGEMENT" GSM SYSTEM FOR MOBILE COMMUNICATIONS, LASSAY-LES-CHATEAUX, EUROPE MEDIA, FR, 1993, pages 308-430, XP000860006 * page 328 - page 329 * -/-- | 7,19 | TECHNICAL FIELDS SEARCHED (Int.Cl.7) H04Q H04L |

The present search report has been drawn up for all claims

| Place of search | Date of completion of the search | Examiner |
|---|---|---|
| Munich | 8 October 2004 | Hultsch, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 04 42 5176

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "Digital cellular telecommunications system (Phase 2+); enhanced Multi-Level Precedence and Pre-emption service (eMLPP); Stage 2 (3GPP TS 03.67 version 7.1.0 Release 1998); ETSI TS 100 932" ETSI STANDARDS, EUROPEAN TELECOMMUNICATIONS STANDARDS INSTITUTE, SOPHIA-ANTIPO, FR, vol. 3-CN4;SMG3, no. V710, April 2000 (2000-04), XP014005735 ISSN: 0000-0001 * page 7 - page 10 * | 8,20 | |
| A | "Digital cellular telecommunications system (Phase 2+); Adaptive Multi-Rate (AMR); Speech processing functions; General description (GSM 06.71 version 7.0.2 Release 1998); ETSI EN 301 703" ETSI STANDARDS, EUROPEAN TELECOMMUNICATIONS STANDARDS INSTITUTE, SOPHIA-ANTIPO, FR, vol. SMG11, no. V702, December 1999 (1999-12), XP014003753 ISSN: 0000-0001 * page 7 * | 13 | TECHNICAL FIELDS SEARCHED (Int.Cl.7) |

The present search report has been drawn up for all claims

| Place of search | Date of completion of the search | Examiner |
|---|---|---|
| Munich | 8 October 2004 | Hultsch, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 578 158 A1**

## ANNEX TO THE EUROPEAN SEARCH REPORT
## ON EUROPEAN PATENT APPLICATION NO.

EP 04 42 5176

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2004

| Patent document cited in search report | | Publication date | Patent family member(s) | | Publication date |
|---|---|---|---|---|---|
| US 6021329 | A | 01-02-2000 | AU | 7459598 A | 27-11-1998 |
| | | | CA | 2289687 A1 | 12-11-1998 |
| | | | CN | 1262019 T | 02-08-2000 |
| | | | EP | 0979582 A1 | 16-02-2000 |
| | | | JP | 2002508895 T | 19-03-2002 |
| | | | WO | 9851109 A1 | 12-11-1998 |
| | | | TW | 407406 B | 01-10-2000 |
| US 5642353 | A | 24-06-1997 | US | 5515378 A | 07-05-1996 |
| | | | AT | 183865 T | 15-09-1999 |
| | | | AU | 670766 B2 | 01-08-1996 |
| | | | AU | 3145493 A | 19-07-1993 |
| | | | CA | 2125571 A1 | 24-06-1993 |
| | | | DE | 69229876 D1 | 30-09-1999 |
| | | | DE | 69229876 T2 | 30-12-1999 |
| | | | EP | 0616742 A1 | 28-09-1994 |
| | | | EP | 0926916 A2 | 30-06-1999 |
| | | | ES | 2137197 T3 | 16-12-1999 |
| | | | FI | 942771 A | 10-06-1994 |
| | | | JP | 7505017 T | 01-06-1995 |
| | | | JP | 3266258 B2 | 18-03-2002 |
| | | | WO | 9312590 A1 | 24-06-1993 |
| | | | WO | 9818272 A1 | 30-04-1998 |
| | | | US | 5546090 A | 13-08-1996 |
| | | | US | 5625880 A | 29-04-1997 |
| | | | US | 5592490 A | 07-01-1997 |
| | | | US | 5828658 A | 27-10-1998 |

EPO FORM P0459

For more details about this annex : see Official Journal of the European Patent Office, No. 12/82